# EUROPEAN PATENT APPLICATION

(11) **EP 2 597 609 A1**
(43) Date of publication of application: **29.05.2013**
(21) Application number: 12173980.9
(22) Date of filing: 28.06.2012
(51) Int. Cl.: G06Q 30/02

(54) **Electronic data and/or information management system**

(30) Priority: 25.11.2011 IT PD20110077 U
(71) Applicant: Mix-x Srl, 10015 Ivrea (TO) (IT)
(72) Inventor: Zilich, Rita, 10015 Ivrea (TO) (IT)
(74) Representative: Vinci, Marcello

(57) **Abstract**

SYSTEM FOR MANAGING DATA AND INFORMATION BETWEEN ONE OR MORE SUPPLIERS/ADMINISTRATORS/USERS, ONE OR MORE SALES AGENTS OR "ACCOUNTS", ONE OR MORE CLIENTS, COMPRISING ONE OR MORE TERMINALS FOR EACH SUBJECT, AND WHERE EACH OF THE TERMINALS INCLUDES AT LEAST ONE FIXED OR MOBILE ELECTRONIC DEVICE AND WHERE THE TERMINALS COMMUNICATE WITH EACH OTHER IN REAL TIME VIA THE INTERNET AND/OR BY VOICE AND/OR VIDEO MESSAGES AND/OR BY THE ENTERING/DOWNLOADING OF ON-LINE DATA AND/OR THROUGH TELEMATIC DEVICES IN GENERAL.

## Description

The present invention relates to an interactive multimedia modular system for the global, integrated and efficient management of the sales force, consisting, for example, of agents, vendors, representatives of the information technology, medical, or pharmaceutical industries such as promoters/pharmaceutical representatives (list provided as a non-limiting example) and, in a more in general, of agents, vendors, representatives of products or services of any kind, hereinafter referred to as "Account". The retail sector has been changing for years due to the diffusion and accessibility of information content conveyed on web platforms and, more generally, non-paper media such as computers, portable computers and fixed or mobile electronic devices whether or not connected to display or geo-referencing tools, usually connected to the network wirelessly or via cable.

Despite the wide availability of software, advanced technologies, fixed and mobile tools and electronic devices, the manner of approach and of management of the business relationship between agents/sellers and customers continues to be significantly tied to the specific personal relationship, direct contact, the customization of the professional experience related to the provision of information as well as promotion and sales activities.

The software tools available to manage the supplier-vendor-customer relationship, such as common CRM software applications do, are not always suitable to monitor and support the vendor-customer contact in an organic, rational and effective way. Often these software packages only allow the storage of contact and sales operations and the monitoring of economic performance, but they do not support the role of promoter/seller in an appropriate way in the different stages of the training related to the product, of the completion of the sale, of the reporting of the customer views or of the pre-sale and post-sale.

In particular, there are no integrated systems on the market today able to manage the following aspects in a comprehensive, efficient and appropriate manner:
· "REAL TIME FEEDBACK", namely the definition and presentation of specialized questionnaires, which allow the acquisition in real time and from any channel (call centre, browser application, smartphone applications, etc.) the results of meetings/encounters with Accounts at the latter's location and immediately upload them to a system/remote database;
· "REAL TIME TRAINING", namely the ability to define and deliver multimedia content in real time based on the analysis of the REAL TIME FEEDBACK form for training-education purposes for the sales force on any channel (call centre, mail, browser applications, smartphone applications, SMS, etc.).This module enables the definition of the information about the product/service and its manner of promotion, marketing and sales with customers and, in the face of new feedback, the subsequent reinforcement of the sales force in relation to the results of the analysis conducted on the data gathered by means of questionnaires/reports, delivered by means of multimedia channels;
· "REAL TIME VIEWING", namely the real-time graphic and numerical representation of the data collected through questionnaires/reports, for the immediate analysis by the management (and by the sales force itself): marketing, sales, strategies, etc.
· "REAL TIME ADMINISTRATION", namely a central administration application from which users can define:
   - The system data structure for the collection of feedback and for the population of the multimedia content to be delivered by the REAL TIME TRAINING module. Note: the data structure of the system can be modified at any time (according to new needs or/and based on the findings about the market obtained through the REAL TIME FEEDBACK module, etc.). The system is designed to dynamically adapt to the needs of the data structure intended to collect feedback (through interventions implemented by the Administration);
   - The definition of functional and relational rules to automatically deliver training content as a result of predefined situations (the rules define the training-related actions to be automatically activated for the sales force when the analysis of the REAL TIME FEEDBACK module results in pre-defined situations).

The purpose of the present invention is the formalization and the definition of a multimedia and interactive web system/model for the integrated management of feedback and training resources intended for the sales force, able to create a dynamic and very fast virtuous circle, to constantly check the current market situation (opinions/needs of customers or other parties interacting with the sales force, information on competitors, feedback on services/products, etc.), and provide the company with the ability to immediately respond with appropriate information and/or training content to be delivered in real time and through any channel to the sales force. This system has the following objectives:
· Increase the level, effectiveness and consistency of the customer-account-supplier chain interaction (with the objective of continuous monitoring of the market through feedback coming from the sales force);
· Increase the level, effectiveness and consistency of the supplier-account-customer chain interaction (with the objectives of developing immediate responsiveness to different market situations, thus providing "mobile-training" content to the sales force). The purpose of the present invention is achieved through a system/model designed for the management of the sales force according to claim 1, taking into account that giving it is a modular system, the various modules can also be suitably used in a disconnected and separated manner, without affecting for that matter the validity of the overall and integrated concept of the system which is the object of the present invention.

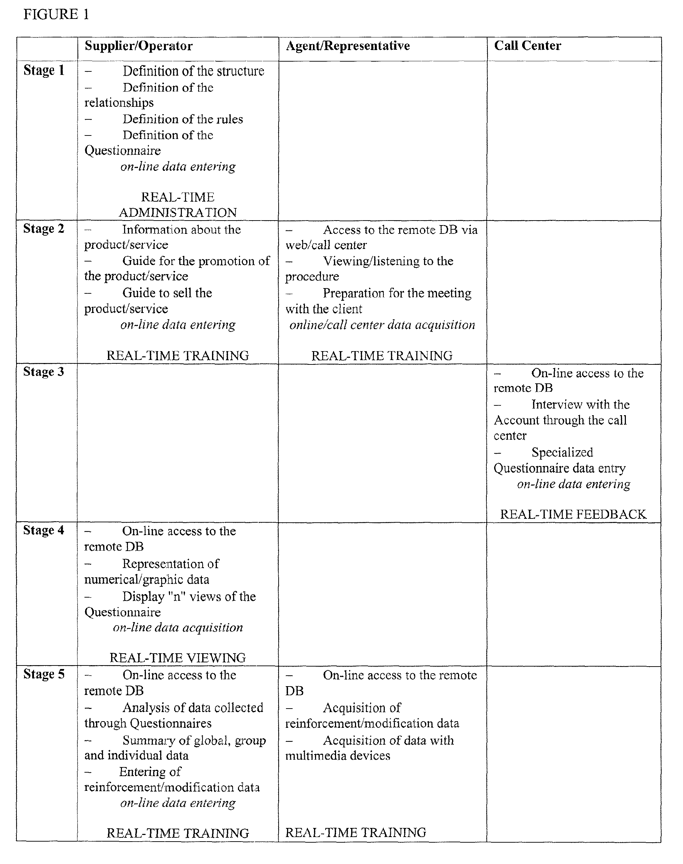

For a better understanding of the present invention a preferred embodiment will be described below by way of a non-limiting example, with reference to Figure 1 attached, where:
- Phase 1 indicatively represents the functional scheme of a system specified according to the present invention;
- Phase 2 describes the activities carried out with the REAL TIME ADMINISTRATION module, which concerns the definition of system data structure, the definition of functional and relational rules and the populating of essential and detailed multimedia content: for example, marketing and technical information related to the product/service, the sales guide for the product/service and the preparation of the meeting and the correct approach with the customer, information on the positioning of the product and those of competitors, the strengths of the product to be highlighted, etc. This module can be used to change and adapt the data structure of the feedback collected by the sales force to the needs of the company at any time.
- Phase 3 describes the activities carried out with the REAL TIME TRAINING module, namely the definition first of all of the information about the product/service and the methods for its promotion, marketing and sales to be used with the customer and, based on subsequent feedback, the subsequent reinforcement/modification for the sales force according to the results of the analysis performed on the data collected through questionnaires/reports (REAL TIME FEEDBACK module), delivered through multimedia channels;
- Phase 4 describes the activities carried out with the REAL TIME FEEDBACK module, namely the presentation of specialized questionnaires to the Accounts through multimedia means (web, mobile, and/or call centre) which enable the acquisition in real-time of the results of the meetings with the Accounts and immediately upload them into the system/remote database;
- Phase 5 shows the activities carried out with the REAL TIME VIEWING module, namely the module providing real-time graphic and numerical representation of the data collected through questionnaires/reports, prepared according to business intelligence strategies, destined for the evaluation by management or the marketing and sales professionals of the supplier of the products and/or services, and subsequent feedback toward the Accounts through the REAL TIME ADMINISTRATION and REAL TIME TRAINING modules;

The computerized/telematic system at the base of the present invention comprises a dynamic web system supported by a remote database, linked via the internet to the following subjects: Supplier/Operator/Administrator, Account, and Call Centre. These three entities interact in various ways and at different times with the system and with the Remote database, which is basically intended for the following functions, as shown schematically in Figure 1.

Phase 1 REAL-TIME ADMINISTRATION (Supplier) - activity:
- Define the data structure of the system
- Define relationships between data in the system
- Define the rules by which data are managed
- Define the Questionnaire according to the defined structure, relationships and rules. Step 2 REAL-TIME TRAINING (Supplier) - activity:
- Define all the specific information about the product/service to be provided;
- Define a concise guide describing how to promote the product/service;
- Define a concise guide describing the sales strategies for the product/service;

Step 2 REAL-TIME TRAINING (Account) - activity:
- Access the remote database via the internet
- View and/or listen to the most appropriate procedure to promote and sell the product/service;
- View and/or listen the most appropriate strategies to approach the customer;

Step 3 REAL-TIME FEEDBACK (Call Centre) - activity:
- Access the Remote DB and the Questionnaire via the internet
- Interview the Account on the basis of the Questionnaire
- Insert data/answers in the on-line questionnaire

Step 4 REAL-TIME VIEWING (Supplier) - activity:
- Access the remote database via the internet
- Display numerical/graphic data of the Questionnaires
- View data through "n" displays which are global, by group and specific Step 5 REAL-TIME TRAINING (Supplier) - activity:
- Access the remote database via the internet
- Analyze the data collected through questionnaires
- Summarize the global, group and specific data to deliver specific feedback messages and/or corrections to the sales force through tailored training solutions;
- Enter reinforcement/modification data ("pills")

Step 5 REAL-TIME TRAINING (Account) - activity:
- Access the remote database via the internet or call centre
- Incorporate the reinforcement/modification messages ("pills")
- Acquire data through various technologies and devices, for example. via the internet using either mobile or fixed devices and with direct and/or synthesized audio components;

This system, the object of the present invention, addresses a series of managerial obstacles between the Supplier, Account and Customer, and significantly improves the monitoring of data and the results of new and/or periodic meetings conducted by the Account with the customer. In addition, a good portion of the Account's "dead time" is used in a smart and efficient way, which for obvious logistic reasons has to go to the Customer's location (useful time for preparation for the meeting) and then back to the office (useful time for reporting) or go to another Customer (useful time to prepare the new meeting and reporting).

In particular, on the basis of the state of the art of the systems available in the market and of the information on current products/services, the advantages this system/model thus described is able to produce are:
- Timely, continuous and consistent information on the product/service to be diffused;
- Continuing, uniform, dense and "mobile" training of the agents, on procedures for the proposal and delivery of the product/service (or other useful information for its success on the market);
- Provision of a dynamic, organic and rational sales guide, able to be modified in real time according to different market situations, specifically prepared for the product/service in question;
- Continuous monitoring of the Account, customizable to the needs of the company: for example, the type and quantity of meetings, the response and feedback received, the actual results of the meeting with the Customer, specific information gathered during the meetings (about competitors, any other critical information), etc. ;
- Optimal use of the Account's work time, a good part of which is spent on transport to go to the Customer's location, return to the office or to go to visit another Customer;
- Continuous and real-time monitoring of the results of meetings and Call Centre calls (and/or through other means like applications for computers, smartphones, etc.), as a result of the constant updating of the System and Remote DB, updated through the Call Centre itself;
- Completion of analysis of specific and global statistics and reports on the results of promotion and sales obtained in real time, as the agents end meetings and the Call Centre reports their activities (and/or through other means like applications for computers, smartphones, etc.) also collecting post-meeting feedback;
- Implementation of reinforcement and/or corrective actions of communication and messages, based on the global, clustered or customized results of the analysis of the data collected, for the sales force, with the customized management of training sessions through fixed or mobile electronic and multimedia devices;

The advantages provided by this method and system are particularly oriented to the rationalization, homogenization and continuous evaluation of the initiatives intended for the promotion and sale of the products and services in question, which are monitored in real time, allowing instant analysis of results, whether targeted (for each Account), for each group of them (e.g., groups related to specific geographic areas - Area Manager), or related to the entire sales :force.

Since this model/system, as described above, is suitable for any communication, promotion, marketing and sale operations related to products and services, it is clear that, the system herein described and illustrated can be subjected to modifications or variations while still remaining within the scope of the claims.

## Claims

1. System for managing data and information between one or more suppliers/administrators/users, one or more sales agents or "accounts", one or more customers, **characterized in that** they comprise:
• at least one terminal to operate as the remote database for the storage of data and information in general;
• at least one input/output data terminal for the data in said database;
• at least one terminal of said supplier, suited to enter, display, manage, analyze and process the data of said database;
• at least one terminal of said sales agent, suited to communicate with said input/output data terminal to enter and update said data and suited to communicate with said database to search specific data and to receive information and updates;
wherein each of said terminals comprises at least one fixed or mobile electronic device and wherein said terminals communicate with each other in real time via the internet and/or via voice and/or video messages and/or via on-line entering/downloading of data and/or via telematic devices in general.

2. System according to claim 1, **characterized in that** it comprises the "feedback" phase, wherein said terminal of said supplier is suited to communicate with said database to change the data structure and store the feedback, or the data supplied by said sales agent at any time.

3. System, according to claims 1 and 2, **characterized in that** it comprises the "viewing" phase, wherein said data can be displayed in concise and customized views for the immediate analysis by said supplier and said sales agent through their relative terminals, and where said views can be changed or modified by said supplier terminal.

4. System, according to claims 1, 2, 3, **characterized in that** it comprises the "training" phase, wherein said terminal of said supplier communicates with said database to analyze and update said data and wherein said sales agent terminal accesses said updated data.

5. System, according to claim 4, **characterized in that** said "training" phase occurs before or during the actual implementation of the sales-promotion activities for the product-service by said sales agent.

6. System, according to claims 1, 2, 3, 4, 5, **characterized in that** it comprises the "administration" phase, wherein said terminal of said supplier communicates with said database to define the structure of the data and information, to define the relationship and rules between said data and information and for the definition of questionnaires.

7. System, according to claims 1, 2, 3, 4, 5, **characterized in that** said terminal of the Database reacts in an automatic and intelligent manner, based on said predefined rules, as a result of certain situations detected in the market by said "feedback" phase, and provides with the pre-established timing, that is, immediately or with delayed cycles, training and informational content on multiple channels and in different modes simultaneously.

8. System, according to claims 1, 2, 3, 4, 5, **characterized in that** said terminal of the supplier analyzes the global, clustered and specific data, displays and prints the statistics relating to all the information collected by the input/output terminal, whether related to a specific sales agent, or related to homogenous groups of subjects, like for example by territory or by similar and/or equivalent products/services; summarizes said information to deliver specific feedback messages to said terminal of the supplier with customized information and/or training contents.
